# EUROPÄISCHE PATENTSCHRIFT

(11) **EP 3 332 463 B1**
(45) Veröffentlichungstag und Bekanntmachung des Hinweises auf die Patenterteilung: **05.02.2020**
(21) Anmeldenummer: 16744307.6
(22) Anmeldetag: 13.07.2016
(51) Int. Cl.: H01R 13/58, H01R 13/6592, H02G 3/30, H02G 15/007

(54) **SYSTEM AUFWEISEND EINE HALTEVORRICTHUNG, UND ELEKTROGERÄT**
SYSTEM COMPRISING A HOLDING DEVICE, AND ELECTRICAL DEVICE
SYSTÈME COMPRENANT UN DISPOSITIF DE RETENUE, ET APPAREIL ÉLECTRIQUE

(30) Priorität: 04.08.2015 DE 102015010045; 21.04.2016 DE 102016004976
(43) Veröffentlichungstag der Anmeldung: 13.06.2018
(73) Patentinhaber: SEW-EURODRIVE GmbH & Co. KG, 76646 Bruchsal (DE)
(72) Erfinder: NIKOLA, Joachim, 76703 Kraichtal (DE)
(86) Internationale Anmeldenummer: PCT/EP2016/025076
(87) Internationale Veröffentlichungsnummer: WO 2017/021009

(56) Entgegenhaltungen:
- EP-B1- 0 709 929
- DE-A1-102008 034 113
- DE-B3- 10 232 657
- DE-U1- 8 900 574
- DE-U1- 29 610 613
- DE-U1-202013 104 941

## Beschreibung

Die Erfindung betrifft ein **System, aufweisend eine Haltevorrichtung,** und ein Elektrogerät.

Die DE 102 32 657 B3 zeigt eine Schirmanschluss-Vorrichtung.

Aus der DE 20 2010 009 722 U1 ist eine Kabel- und Leistungsführung bekannt.

In der DE 20 2009 016 954 U1 sind ein Verbindungssystem und ein dazugehöriges Set offenbart.

Die DE 10 2008 034 113 A1 zeigt eine elektrische Verbindungseinrichtung.

Aus der DE 101 55 434 C1 ist eine Kabeldurchführung durch eine Schirmungswand bekannt.

In der JP 2007 131 086 A sind ein Erdanschluss für ein Fahrzeug und ein Erdungsverfahren für ein Fahrzeug offenbart.

Die EP 0 709 929 B1 zeigt ein Hochfrequenz-Steckverbindersystem.

Aus der DE 297 15 884 U1 ist ein Anschlusselement für ein Schirmkabel bekannt.

In der DE 197 43 353 A1 ist eine Anordnung zur elektrischen Kontaktierung von Kabelabschirmungen offenbart.

Die WO 2015/003831 A1 zeigt eine Busanschlussvorrichtung.

Aus der DE 296 10 613 U1 sind Anschlussmittel für Leitungen einer industriellen Steuerung bekannt.

Aus der DE 89 00 574 U1 ist ein Gehäuse für einen mehrpoligen Steckverbinder bekannt.

Aus der DE 20 2013 104 941 U1 ist eine elektrische Steckverbinderanordnung und ein Schirmanbindungselement hierfür bekannt.

Der Erfindung liegt daher die Aufgabe zugrunde, eine Haltevorrichtung und ein Elektrogerät weiterzubilden, wobei die Sicherheit verbessert werden soll.

Erfindungsgemäß wird die Aufgabe bei dem System nach den in Anspruch 1 angegebenen Merkmalen und bei dem Elektrogerät nach den in Anspruch 12 genannten Merkmalen gelöst.

Wichtige Merkmale der Erfindung bei der Haltevorrichtung für ein Kabel, aufweisend ein Blechteil, sind, dass
das Blechteil einen ersten Blechteilabschnitt und einen zweiten Blechteilabschnitt aufweist, die mittels eines Biegeabschnitts verbunden sind,
wobei der erste Blechteilabschnitt relativ zum zweiten Blechteilabschnitt verbiegbar ist, insbesondere manuell verbiegbar, insbesondere im Biegeabschnitt, insbesondere derart, dass der erste Blechteilabschnitt und der zweite Blechteilabschnitt in einem nichtverschwindenden Biegewinkel zueinander angeordnet sind,
wobei der erste Blechteilabschnitt elektrisch leitend mit einem Kabelschirm des Kabels verbunden ist,
wobei das Kabel kraftschlüssig verbunden ist mit dem ersten Blechteilabschnitt, insbesondere wobei das Kabel mittels der Haltevorrichtung (3, 103) gehalten und geführt ist, insbesondere lokal geführt ist,
wobei der zweite Blechteilabschnitt eine Schnittstelle zur mechanischen Verbindung aufweist.

Von Vorteil ist dabei, dass der erste Blechteilabschnitt relativ zum zweiten Blechteilabschnitt in einfacher Art und Weise ausrichtbar ist. Somit ist die Ausrichtung des ersten Blechteilabschnitts bis zu einem gewissen Grad, der durch einen maximalen Biegewinkel bestimmt ist, unabhängig von der Ausrichtung des zweiten Blechteilabschnitts, die durch die Schnittstelle zur mechanischen Verbindung beispielsweise mit einem Elektrogerät festgelegt wird. Dadurch ist die Auflagefläche für das Kabel auf dem ersten Blechteilabschnitt anpassbar an das Kabel.

Das Kabel ist von der Haltevorrichtung gehalten und geführt. Dabei ist Kabelbruch vermeidbar, da die Auflagefläche für das Kabel ausrichtbar ist an die Erstreckungsrichtung des Kabels, so dass ein für das Kabel maximal zulässiger Biegeradius nicht überschritten wird.

Das Verbiegen des Blechteils ist manuell ausführbar. Somit ist eine Anpassung der Haltevorrichtung an die Erstreckungsrichtung des Kabels werkzeuglos möglich, beispielsweise direkt in der Anwendung der Haltevorrichtung. Dabei ist auch eine nachträgliche Anpassung nach dem Einbau der Haltevorrichtung möglich.

Die elektrisch leitende Verbindung des Leiters mit dem Blechteil erfolgt großflächig, so dass eine besonders sichere Verbindung geschaffen ist.

Bei einer vorteilhaften Ausgestaltung ist der Biegeabschnitt linienhaft ausgeführt. Von Vorteil ist dabei, dass ein gleichmäßiger Biegewinkel zwischen dem ersten und zweiten Blechteilabschnitt einstellbar ist. Somit ist die Stabilität der Haltevorrichtung verbessert.

Erfindungsgemäß weist das Blechteil eine Ausnehmung auf, durch die das Kabel hindurchführbar ist, insbesondere zumindest teilweise hindurchgeführt ist, insbesondere wobei der Biegeabschnitt zwei Stegabschnitte aufweist, wobei die Stegabschnitte voneinander beabstandet sind mittels der Ausnehmung. Von Vorteil ist dabei, dass das Kabel auf zwei gegenüberliegenden Seiten des Blechteils führbar ist. Dabei ist vorteilhafterweise eine Verbindung des Kabels mit einem Elektrogerät unabhängig von der Ausrichtung der Haltevorrichtung ermöglicht. Vorteilhafterweise ist die Haltevorrichtung kompakt ausführbar.

Bei einer vorteilhaften Ausgestaltung ist das Kabel, insbesondere ein Leiter, insbesondere Innenleiter, des Kabels, mit einem Steckverbinderteil verbunden. Von Vorteil ist dabei, dass das Kabel beziehungsweise der Leiter in einfacher Art und Weise mit einem Elektrogerät verbindbar ist mittels eines Gegensteckverbinderteils.

Bei einer vorteilhaften Ausgestaltung ist das Steckverbinderteil durch die Ausnehmung hindurchführbar. Von Vorteil ist dabei, dass das mit dem Steckverbinderteil verbundene Kabel vorkonfektionierbar ist. Vorteilhafterweise ist ein vorkonfektioniertes Kabel mit Steckverbinderteil sowohl für eine Anwendung, bei der das Steckverbinderteil durch die Ausnehmung hindurchgeführt ist, als auch für eine Anwendung, bei der das Kabel entlang des Blechteils geführt ist, insbesondere nicht durch die Ausnehmung hindurchgeführt ist, geeignet.

Bei einer vorteilhaften Ausgestaltung endet der Kabelschirm an dem ersten Blechteilabschnitt. Von Vorteil ist dabei, dass der Endbereich des Kabelschirms zwischen dem Blechteil und einer Kabelschelle einklemmbar ist. Dabei ist ein Auftrennen vom Endbereich des Kabelschirms, der beispielsweise geflochten ausgeführt ist, ausgehend verhinderbar.

Bei einer vorteilhaften Ausgestaltung ist der Biegeabschnitt durch zumindest zwei Stegabschnitte gebildet, die mittels einer zwischen den Stegabschnitten angeordneten Ausnehmung voneinander beabstandet sind. Von Vorteil ist dabei, dass das Verbiegen des Blechteils in einfacher Art und Weise werkzeuglos ausführbar ist.

Bei einer vorteilhaften Ausgestaltung sind die Stegabschnitte konkav ausgeführt und die Ausnehmung ist konvex ausgeführt, insbesondere wobei die Stegabschnitte linienhaft angeordnet sind. Von Vorteil ist dabei, dass das Blechteil automatisch entlang einer Linie verbiegbar ist. Vorteilhafterweise sind die mechanischen Spannungen in dem Blechteil in dem Biegeabschnitt konzentrierbar. Somit ist die Haltbarkeit der Haltevorrichtung verbessert.

Erfindungsgemäß weist der Biegeabschnitt eine geringere Blechstärke als alle sonstigen Blechteilabschnitte. Von Vorteil ist dabei, dass das das Blechteil in einfacher Art und Weise mittels des Biegeabschnitts werkzeuglos verbiegbar ist.

Bei einer vorteilhaften Ausgestaltung weist die Haltevorrichtung eine Kabelschelle auf, wobei das Kabel mittels der Kabelschelle mit der Haltevorrichtung kraftschlüssig verbunden ist. Von Vorteil ist dabei, dass das Kabel, insbesondere der Kabelschirm, die Kabelschelle und das Blechteil großflächig berührt. Somit ist eine sichere elektrisch leitende Verbindung zwischen dem Kabel, insbesondere dem Kabelschirm, und der Haltevorrichtung geschaffen.

Bei einer vorteilhaften Ausgestaltung ist das Kabel zwischen dem Blechteil und der Kabelschelle angeordnet, wobei das Kabel zugentlastet ist mittels des Blechteils und der Kabelschelle. Von Vorteil ist dabei, dass Kabelbruch verhinderbar ist, somit ist die Sicherheit verbessert.

Bei einer vorteilhaften Ausgestaltung ist der Kabelschirm des Kabels elektrisch leitend mit der Kabelschelle verbunden. Von Vorteil ist dabei, dass die Auflagefläche des Kabels, insbesondere des Kabelschirms auf der Haltevorrichtung vergrößerbar ist mittels der Kabelschelle. Somit ist eine sichere elektrisch leitende Verbindung geschaffen.

Bei einer vorteilhaften Ausgestaltung weist das Kabel eine Kabelisolierung auf, die zwischen der Kabelschelle und dem Blechteil abisoliert ist. Von Vorteil ist dabei, dass eine lokale Abisolierung die Stabilität des Kabels verbessert und gleichzeitig eine sichere elektrisch leitende Verbindung herstellbar ist.

Bei einer vorteilhaften Ausgestaltung weist die Kabelschelle einen Kabelschellenabschnitt und eine Ausnehmung für ein Schraubmittel auf, wobei das Blechteil eine Ausnehmung zur Hindurchführung des Kabelschellenabschnitts und eine Bohrung für das Schraubmittel aufweist, wobei die Kabelschelle mittels des Kabelschellenabschnitts in der Ausnehmung geführt ist, wobei die Kabelschelle mittels des Schraubmittels lösbar mit dem Blechteil verbunden ist. Von Vorteil ist dabei, dass die Kabelschelle lösbar verbunden ist mit dem Blechteil. Vorteilhafterweise ist das Kabel in Erstreckungsrichtung des Kabels verschiebbar zwischen der Kabelschelle und dem Blechteil anordenbar. Dabei ist das Kabel in zumindest einer Querrichtung zur Erstreckungsrichtung begrenzbar mittels des Kabelschellenabschnitts und/oder des Schraubmittels.

Bei einer vorteilhaften Ausgestaltung ist ein zweites Kabel mittels der Kabelschelle mit der Haltevorrichtung verbunden. Von Vorteil ist dabei, dass zwei Kabel mittels einer einzigen Kabelschelle mit der Haltevorrichtung verbindbar sind. Es sind Bauteile einsparbar und der Umweltschutz ist verbessert.

Bei einer vorteilhaften Ausgestaltung sind die Kabel mittels der Haltevorrichtung gebündelt. Von Vorteil ist dabei, dass die Kabel gemeinsam geführt sind von der Haltevorrichtung. Vorteilhafterweise bleibt die Bündelung bei einem Austausch der Haltevorrichtung von einem Elektrogerät an ein anderes Elektrogerät erhalten, so dass das Risiko Kabel zu vertauschen, reduziert ist. Die Sicherheit ist verbessert.

Bei einer vorteilhaften Ausgestaltung weisen das Kabel und das zweite Kabel einen identischen Kabelquerschnitt auf. Von Vorteil ist dabei, dass die beiden Kabel von der einen Kabelschelle gleichmäßig andrückbar sind an das Blechteil, so dass die gleiche Presskraft auf beide Kabel wirkt. Vorteilhaft ist dabei, dass beide Kabel sicher mit der Haltevorrichtung verbunden sind. Die Presskraft ist mittels des Schraubmittels gleichmäßig einstellbar, so dass ein maximaler Pressdruck für beide Kabel eingehalten wird.

Erfindungsgemäß weist das Blechteil einen dritten Blechteilabschnitt auf, der sich parallel zu dem ersten Blechteilabschnitt erstreckt, wobei ein weiteres Kabel mittels einer weiteren Kabelschelle mit dem dritten Blechteilabschnitt verbunden ist, wobei ein Leiter des weiteren Kabels, insbesondere Kabelschirm, elektrisch leitend mit der weiteren Kabelschelle und dem dritten Blechteilabschnitt verbunden ist. Von Vorteil ist dabei, dass die Haltevorrichtung kompakt ausführbar ist.

Bei einer vorteilhaften Ausgestaltung weist das weitere Kabel einen kleineren oder größeren Kabelquerschnitt auf als das Kabel. Von Vorteil ist dabei, dass mittels der Haltevorrichtung Kabel mit unterschiedlichen Kabelquerschnitten bündelbar sind.

Erfindungsgemäß weist das Blechteil einen vierten Blechteilabschnitt und einen fünften Blechteilabschnitt auf, wobei der vierte Blechteilabschnitt in einem nichtverschwindenden Winkel zu dem zweiten Blechteilabschnitt angeordnet ist, insbesondere rechtwinklig angeordnet ist, wobei der fünfte Blechteilabschnitt in einem nichtverschwindenden Winkel zu dem ersten Blechteilabschnitt angeordnet ist, insbesondere rechtwinklig angeordnet ist, wobei zwischen dem vierten Blechteilabschnitt und dem fünften Blechteilabschnitt der Biegeabschnitt angeordnet ist, wobei der Biegewinkel zwischen dem ersten Blechteilabschnitt und dem zweiten Blechteilabschnitt begrenzt ist mittels des vierten Blechteilabschnitts und mittels des fünften Blechteilabschnitts, wobei der vierte Blechteilabschnitt den fünften Blechteilabschnitt berührt bei einem maximalen Biegewinkel. Von Vorteil ist dabei, dass der Biegewinkel des Blechteils begrenzbar ist mittels des vierten und fünften Blechteilabschnitts. Somit ist ein Überbiegen des Blechteils und daraus resultierendes sprödes Brechen verhindert. Die Sicherheit ist verbessert.

Bei einer vorteilhaften Ausgestaltung sind der erste Blechteilabschnitt und der zweite Blechteilabschnitt mittels eines Verbindungskabels elektrisch leitend miteinander verbunden. Von Vorteil ist dabei, dass eine redundante elektrisch leitende Verbindung geschaffen ist. Sollte das Blechteil brechen, wäre somit immer noch eine sichere Erdung ermöglicht. Die Sicherheit ist verbessert.

Erfindungsgemäß ist das Blechteil einstückig ausgeführt, insbesondere als Stanzbiegeteil ausgeführt. Von Vorteil ist dabei, dass das Blechteil in einfacher Art und Weise kostengünstig fertigbar ist.

Wichtige Merkmale der Erfindung bei dem Elektrogerät aufweisend eine Haltevorrichtung für ein Kabel, vorzugsweise wie zuvor beschrieben und/oder nach einem der auf die Haltevorrichtung gerichteten Ansprüche, sind, dass
das Elektrogerät zumindest ein Gehäuseteil aufweist,
wobei die Haltevorrichtung lösbar verbunden ist mit dem Gehäuseteil,
wobei das Gehäuseteil elektrisch leitend verbunden ist mit einem Kabelschirm des Kabels mittels der Haltevorrichtung,
insbesondere wobei das Gehäuseteil geerdet ist.

Von Vorteil ist dabei, dass das Kabel mittels der Haltevorrichtung lösbar mit dem Elektrogerät verbindbar ist. Dabei ist eine sicherere elektrisch leitende Verbindung des Kabelschirms mit dem Elektrogerät geschaffen. Vorteilhafterweise sind mehrere Kabel mittels der Haltevorrichtung bündelbar und gleichzeitig lösbar von dem Elektrogerät. Dadurch ist ein Austausch des Elektrogerätes in einfacher Art und Weise durchführbar. Dabei ist das Risiko eines Vertauschens der Kabel reduzierbar.

Bei einer vorteilhaften Ausgestaltung weist der zweite Blechteilabschnitt zwei Führungsabschnitte auf zur Verbindung der Haltevorrichtung mit dem Gehäuseteil, insbesondere als Schnittstelle zur mechanischen Verbindung. Von Vorteil ist dabei, dass die Haltevorrichtung in einfacher Art und Weise mit dem Elektrogerät sicher verbindbar ist.

Bei einer vorteilhaften Ausgestaltung ist die Haltevorrichtung mittels der Führungsabschnitte steckverbunden mit dem Gehäuseteil. Von Vorteil ist dabei, dass die Haltevorrichtung lösbar mit dem Elektrogerät verbindbar ist.

Bei einer vorteilhaften Ausgestaltung ist die Haltevorrichtung mittels eines Schraubmittels lösbar mit dem Gehäuseteil verbunden. Von Vorteil ist dabei, dass das mit den Kabeln verbundene Elektrogerät in einfacher Art und Weise austauschbar ist, wobei nur das Schraubmittel zu lösen ist um alle Erdverbindungen zu lösen, die Kabelschirme bleiben mit der Haltevorrichtung elektrisch leitend verbunden.

Bei einer vorteilhaften Ausgestaltung ist das Kabel mittels eines Steckverbinderteils mit dem Elektrogerät lösbar verbunden, wobei das Elektrogerät ein Gegensteckverbinderteil aufweist insbesondere wobei ein Leiter, insbesondere Innenleiter, des Kabels elektrisch leitend mit dem Gegensteckverbinderteil verbunden ist mittels des Steckverbinderteils. Von Vorteil ist dabei, dass das Elektrogerät in einfacher Art und Weise austauschbar ist, da nur das Schraubmittel zur Verbindung mit der Haltevorrichtung zu lösen ist und alle anderen Verbindungen gesteckt sind.

Weitere Vorteile ergeben sich aus den Unteransprüchen.

Die Erfindung wird nun anhand von Abbildungen näher erläutert:
In der Figur 1 ist ein erfindungsgemäßes Elektrogerät mit der erfindungsgemäßen Haltevorrichtung in Schrägansicht gezeichnet.
Figur 2 zeigt eine Detailansicht des erfindungsgemäßen Elektrogeräts aus Figur 1.
In Figur 3 ist ein Blechteil der erfindungsgemäßen Haltevorrichtung in Seitenansicht gezeigt.
In Figur 4 ist eine Draufsicht auf das Blechteil dargestellt.
Figur 5 zeigt eine Schrägansicht des Blechteils.
Figur 6 zeigt ein Blechteil einer zweiten Ausführungsform der erfindungsgemäßen Haltevorrichtung in Draufsicht.
In Figur 7 ist eine Schrägansicht des Blechteils der zweiten Ausführungsform dargestellt.

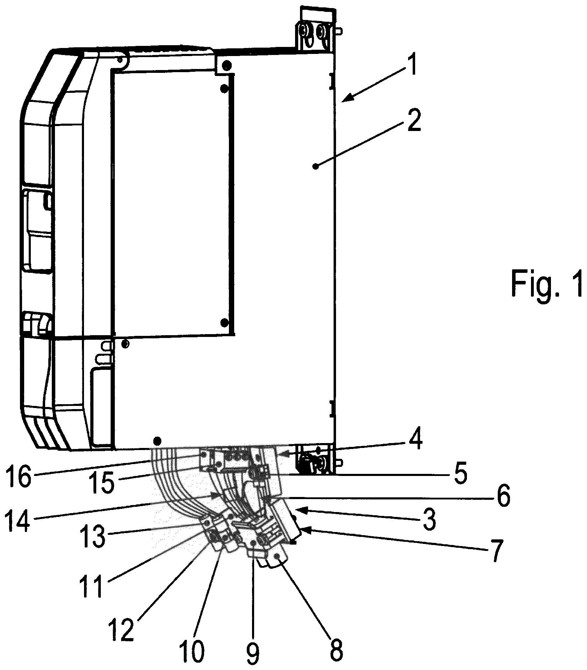

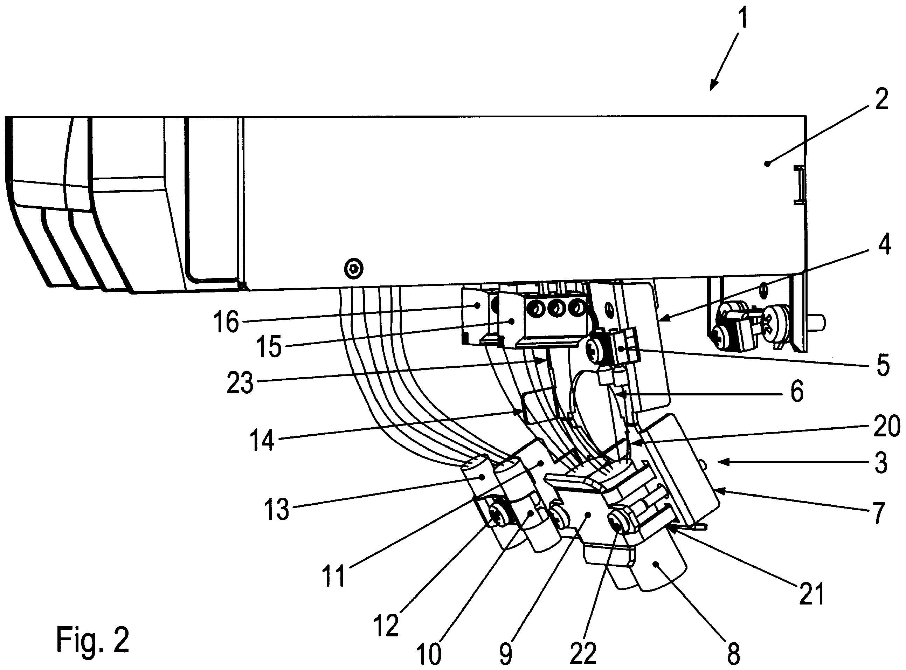

Das in Figur 1 und 2 dargestellte erfindungsgemäße Elektrogerät 1, insbesondere ein Umrichter zur Speisung eines Elektromotors, weist ein Gehäuse mit zumindest einem Gehäuseteil 2 auf, das elektrisch leitend ausgeführt ist, insbesondere aus metallischem Material, vorzugsweise Aluminium. Das Gehäuseteil 2 weist einen Erdanschluss auf. Vorzugsweise ist das Gehäuseteil 2 geerdet.

Das Elektrogerät 1 weist ein Gegensteckverbinderteil auf zur Verbindung mit einem Steckverbinderteil (15, 16), das mit einem Kabel 8, insbesondere Motoranschlusskabel, verbunden ist.

Das Kabel 8 weist einen Kabelschirm auf. Dabei umgibt der Kabelschirm den oder die Leiter, insbesondere Innenleiter, des Kabels 8 radial. Der Kabelschirm ist aus einem elektrisch leitenden Material ausgeführt, insbesondere aus einem metallischen Material, vorzugsweise Kupfer oder Aluminium. Mittels des Kabelschirmes sind die Leiter im Inneren des Kabels abschirmbar gegen elektromagnetische Störfelder.

Die Leiter sind mit dem Steckverbinderteil (15, 16) verbunden, so dass eine elektrisch leitende Verbindung der Leiter mit einer Elektronik des Elektrogerätes 1 mittels des Steckverbinderteils (15, 16) und des Gegensteckverbinderteils ausführbar ist.

Die Leiter des Kabels 8 weisen jeweils eine Isolierung auf. Das Kabel 8 weist eine Vereinzelungsstelle auf, an der der Kabelschirm endet und ab der die Leiter jeweils einzeln führbar sind. Vorzugsweise weist das Kabel 8 eine weitere Isolierung auf, die den Kabelschirm in radialer Richtung umgibt.

Das Elektrogerät 1 ist mit einer erfindungsgemäßen Haltevorrichtung 3 verbunden.

Die Haltevorrichtung 3 weist
- ein Blechteil 32, aufweisend einen ersten Blechteilabschnitt 20, einen zweiten Blechteilabschnitt 23, einen dritten Blechteilabschnitt 31, einen vierten Blechteilabschnitt 4, einen fünften Blechteilabschnitt 7, einen sechsten Blechteilabschnitt 11, einen siebten Blechteilabschnitt 14 und einen Biegeabschnitt 30,
- eine erste Kabelschelle 9,
- eine zweite Kabelschelle 10,
- Schraubmittel (12, 22) und
- ein Verbindungsmittel 5 auf.

Das Blechteil 20 ist einstückig ausgeführt, vorzugsweise als Stanzbiegeteil.

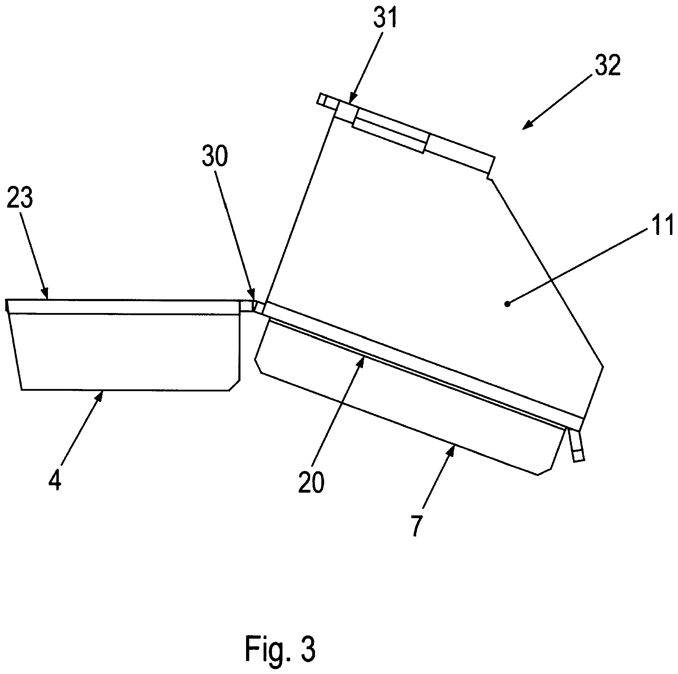

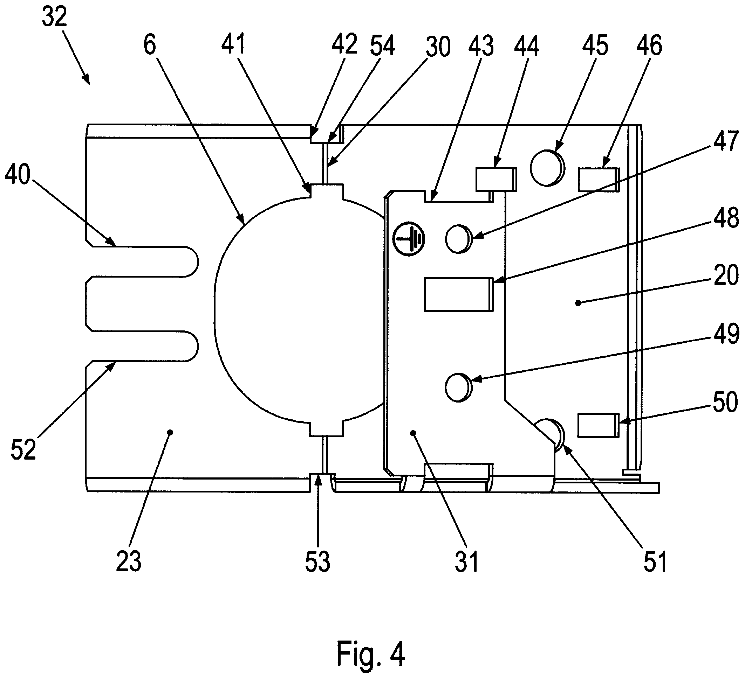

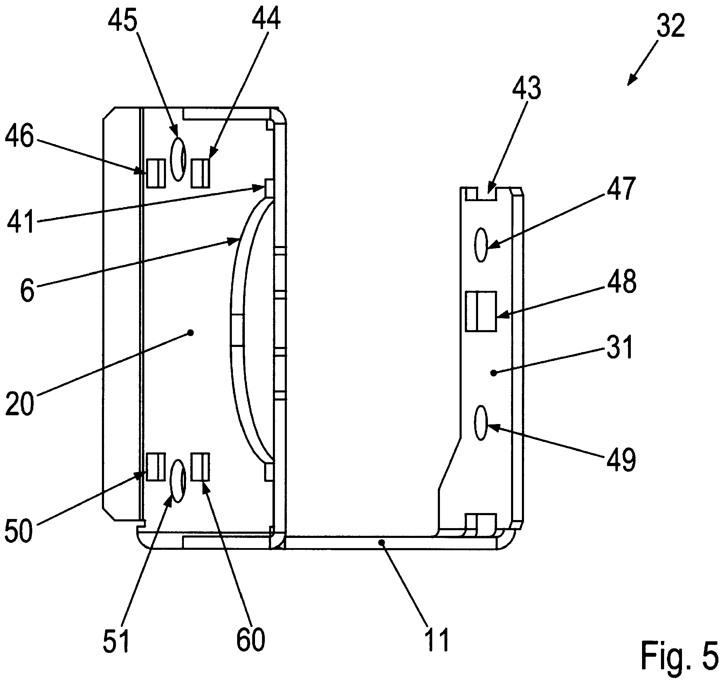

Der Biegeabschnitt 30 ist zwischen dem ersten Blechteilabschnitt 20 und dem zweiten Blechteilabschnitt 23 angeordnet. Der Biegeabschnitt 30 ist geeignet ausgeführt, den ersten Blechteilabschnitt 20 relativ zum zweiten Blechteilabschnitt 23 manuell zu verbiegen. Dazu weist das in den Figuren 3 bis 5 im Detail dargestellte Blechteil 32 eine Ausnehmung 6 auf, die zwischen zwei Stegabschnitten (53, 54) angeordnet ist. Die maximale Ausdehnung der Ausnehmung 6 ist größer als die Stegbreite der Stegabschnitte (53, 54), vorzugsweise mehr als doppelt so groß, insbesondere mehr als dreimal so groß, insbesondere mehr als viermal so groß, besonders bevorzugt mehr als fünfmal so groß. Weiterhin weist das Blechteil 32 auf zwei gegenüberliegenden Seiten jedes Stegabschnittes (53, 54) jeweils eine Verjüngung (41, 42) auf.

Unter manuellem Verbiegen wird dabei ein werkzeugloses Verbiegen verstanden, insbesondere ein Verbiegen mit bloßen Händen.

Vorzugsweise ist die Ausnehmung 6 so groß ausgeführt, dass das Steckverbinderteil 15 durch die Ausnehmung 6 hindurchführbar ist. Vorzugsweise ist das Kabel 8 beim Betrieb des Elektrogerätes teilweise durch die Ausnehmung hindurchgeführt, so dass ein Teilbereich des Kabels 8 von dem Blechteil 32 umgeben ist.

Durch das Verbiegen sind der erste und zweite Blechteilabschnitt (20, 23) in einem nichtverschwindenden Biegewinkel zueinander angeordnet.

Der erste und zweite Blechteilabschnitt (20, 23) sind mittels eines Verbindungskabels elektrisch leitend miteinander verbunden. Dazu ist das Verbindungskabel elektrisch leitend mit dem Kabelschirm des Kabels 8 verbunden und mittels eines Verbindungsmittels 5 lösbar mit dem zweiten Blechteilabschnitt 23 verbunden. Das Verbindungsmittel 5 weist ein Schraubmittel auf, das das Verbindungskabel lösbar mit dem zweiten Blechteilabschnitt 23 verbindet.

Der vierte Blechteilabschnitt 4 erstreckt sich in einem nichtverschwindenden Winkel, insbesondere im rechten Winkel, von dem zweiten Blechteilabschnitt 23. Der fünfte Blechteilabschnitt 7 erstreckt sich in einem nicht verschwindenden Winkel, insbesondere im rechten Winkel, von dem ersten Blechteilabschnitt 20. Der vierte und fünfte Blechteilabschnitt (4, 7) sind beabstandet von dem Biegeabschnitt 30 angeordnet. Mittels des vierten und fünften Blechteilabschnitts (4, 7) ist der Biegewinkel zwischen dem ersten und zweiten Blechteilabschnitt (20, 23) begrenzt. Dazu erstrecken sich der vierte und fünfte Blechteilabschnitt (4, 7) im Wesentlichen parallel von dem ersten beziehungsweise zweiten Blechteilabschnitt (20, 23). Bei Erreichen eines maximalen Biegewinkels in eine erste Biegerichtung berühren sich der vierte und fünfte Blechteilabschnitt (4, 7), so dass ein weiteres Verbiegen in die erste Biegerichtung verhindert ist. Dabei ist der Biegewinkel in der ersten Biegerichtung kleiner als 90°, insbesondere kleiner als 45°, vorzugsweise kleiner als 20°.

Der dritte Blechteilabschnitt 31 ist beabstandet vom ersten Blechteilabschnitt 20 und im Wesentlichen parallel zu dem ersten Blechteilabschnitt 20 angeordnet. Dabei spannt der dritte Blechteilabschnitt 31 eine Ebene auf und der erste Blechteilabschnitt 20 spannt eine weitere Ebene auf, wobei die Normalenvektoren dieser Ebenen im Wesentlichen parallel zueinander angeordnet sind. Der dritte Blechteilabschnitt 31 ist mittels des sechsten Blechteilabschnitts 11 mit dem ersten Blechteilabschnitt 20 verbunden. Vorzugsweise sind der erste und sechste Blechteilabschnitt (20, 11) und der dritte und sechste Blechteilabschnitt (31, 11) jeweils im rechten Winkel zueinander angeordnet.

Der siebte Blechteilabschnitt 14 ist an dem zweiten Blechteilabschnitt 23 angeordnet und erstreckt sich im Wesentlichen parallel zu dem sechsten Blechteilabschnitt 11. Mittels des sechsten und siebten Blechteilabschnitts (11, 14) ist der Biegewinkel zwischen dem ersten und zweiten Blechteilabschnitt (20, 23) begrenzt, insbesondere begrenzt in einer zweiten Biegerichtung, die der ersten Biegerichtung entgegengerichtet ist.

Der sechste und siebte Blechteilabschnitt (11, 14) sind beabstandet von dem Biegeabschnitt 30 angeordnet. Vorzugsweise weist der sechste Blechteilabschnitt 11 einen Vorsprung auf, der derart ausgeführt ist, dass der siebte Biegeabschnitt 14 beim Erreichen eines maximalen zweiten Biegewinkels in der zweiten Biegerichtung den Vorsprung berührt, insbesondere begrenzt ist von dem Vorsprung. Der maximale zweite Biegewinkel ist kleiner als 90°, vorzugsweise kleiner als 45°, vorzugsweise kleiner als 20°, insbesondere kleiner als 10°.

Der zweite Blechteilabschnitt 23 weist eine Schnittstelle zur mechanischen Verbindung mit dem Elektrogerät 1 auf. Vorzugsweise ist die Schnittstelle als zwei Führungsabschnitte (40, 52), insbesondere Schlitze, in dem zweiten Blechteilabschnitt 23 ausgeführt, mittels derer das Blechteil 32 mit dem Elektrogerät 1 verbindbar, insbesondere steckverbindbar ist. Dazu weist das Elektrogerät 1 zwei nicht dargestellte Schraubmittel auf, auf denen die Haltevorrichtung 3 geführt ist mittels der Führungsabschnitte (40, 52). Mittels der Schraubmittel ist die Haltevorrichtung 3 kraftschlüssig und lösbar verbindbar mit dem Elektrogerät 1.

Die erste Kabelschelle 9 weist einen Kabelschellenabschnitt 21, insbesondere ein Füßchen, auf, der in eine Ausnehmung 44 in dem ersten Blechteilabschnitt 20 einführbar ist. Mittels des Kabelschellenabschnitts 21 ist die Kabelschelle 9 in dem ersten Blechteilabschnitt 20 geführt. Vorzugsweise weist die erste Kabelschelle 9 zwei oder sogar vier Kabelschellenabschnitte 21 auf die in einer jeweiligen Ausnehmung (44, 46, 50) in dem ersten Blechteilabschnitt 20 geführt sind. Dabei sind die Kabelschellenabschnitte 21 in Querrichtung zur Erstreckungsrichtung des Kabels 8 beidseitig von dem Kabel 8 angeordnet.

Die erste Kabelschelle 9 und der erste Blechteilabschnitt 20 weisen jeweils eine Bohrung 45 auf zur Hindurchführung eines Schraubmittels 22. Mittels des Schraubmittels 22 ist die erste Kabelschelle 9 kraftschlüssig verbunden mit dem ersten Blechteilabschnitt 20.

Das Kabel 8 liegt auf dem ersten Blechteilabschnitt 20 auf, wobei der Kabelschirm elektrisch leitend mit dem ersten Blechteilabschnitt 20 verbunden ist. Das Kabel 8 ist zwischen dem ersten Blechteilabschnitt 20 und der ersten Kabelschelle 9 angeordnet. Somit ist das Kabel 8 kraftschlüssig verbunden mit der Haltevorrichtung 3.

Falls das Kabel 8 eine Isolierung aufweist, die den Kabelschirm umgibt, so ist das Kabel 8 im Berührbereich des ersten Blechteilabschnitts 20 und des Kabels 8 abisoliert, so dass der Kabelschirm elektrisch leitend mit dem ersten Blechteilabschnitt 20 verbunden ist. Vorzugsweise ist die Vereinzelungsstelle des Kabels 8 zwischen der ersten Kabelschelle 9 und dem ersten Blechteilabschnitt 20 angeordnet.

Das Kabel 8 und/oder die Innenleiter des Kabels 8 sind zugentlastet mittels der Haltevorrichtung 3.

Vorzugsweise ist ein zweites Kabel ebenfalls kraftschlüssig mit dem ersten Blechteilabschnitt 20 und der ersten Kabelschelle 9 verbunden. Dazu ist das zweite Kabel zwischen dem ersten Blechteilabschnitt 20 und der Kabelschelle 9 angeordnet und erstreckt sich abschnittsweise im Wesentlichen parallel zu dem Kabel 8. Somit sind das Kabel 8 und das zweite Kabel gebündelt angeordnet mittels der Haltevorrichtung.

Auf dem dritten Blechteilabschnitt 31 ist ein weiteres Kabel 13 aufgelegt, vorzugsweise zwei weitere Kabel mit identischem Kabelquerschnitt. Dabei ist der Kabelquerschnitt des weiteren Kabels 13 kleiner als der Kabelquerschnitt des Kabels 8. Ein Kabelschirm des weiteren Kabels 13 ist elektrisch leitend mit dem dritten Blechteilabschnitt 31 verbunden. Das weitere Kabel 13 ist zwischen dem dritten Blechteilabschnitt 31 und der zweiten Kabelschelle 10 angeordnet. Dadurch ist das weitere Kabel 13 kraftschlüssig mit der Haltevorrichtung verbunden.

Der dritte Blechteilabschnitt 31 weist zumindest eine Ausnehmung zur Führung eines Kabelschellenabschnitts der zweiten Kabelschelle, insbesondere Füßchen, auf. In der zweiten Kabelschelle 10 und in dem dritten Blechteilabschnitt 31 ist jeweils eine Bohrung ausgeführt zur Hindurchführung eines Schraubmittels 12. Mittels des Schraubmittels 12 ist die zweite Kabelschelle 10 lösbar und kraftschlüssig mit dem dritten Blechteilabschnitt 31 verbunden.

Vorzugsweise fungiert das weitere Kabel 13 als Signalkabel beispielsweise für einen mit dem Motor verbundenen Sensor, wie Temperatursensor, Geber oder Stromsensor.

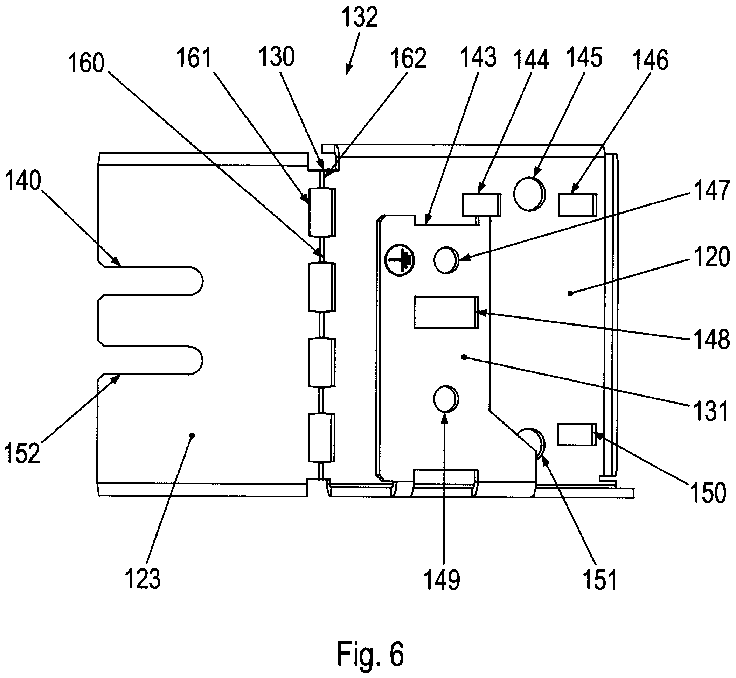

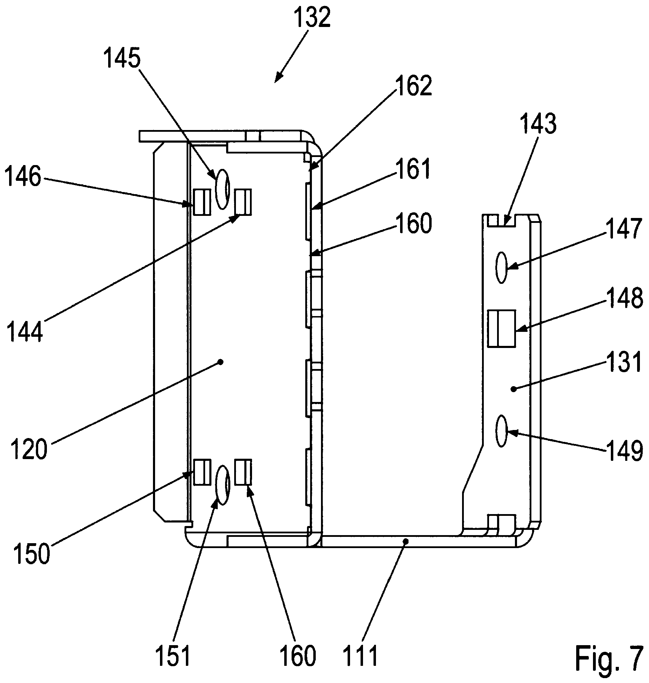

In den Figuren 6 und 7 ist eine zweite Ausführungsform des erfindungsgemäßen Blechteils 132 dargestellt.

Die zweite Ausführungsform des erfindungsgemäßen Blechteils 132 entspricht in wesentlichen Teilen der ersten Ausführungsform des erfindungsgemäßen Blechteils 32. Daher werden hier nur die von der ersten Ausführungsform verschiedenen Merkmale beschrieben. Die weiteren Merkmale entsprechen der ersten Ausführungsform des Blechteils 32.

Der Biegeabschnitt 130 der zweiten Ausführungsform des Blechteils 132 ist gebildet durch zumindest zwei voneinander beabstandete Stegabschnitte (160, 162). Zwischen den Stegabschnitten (160, 162) ist jeweils eine Ausnehmung 161 angeordnet.

Der Biegeabschnitt 130 erstreckt sich linienhaft, vorzugsweise in einer Querrichtung zu der Erstreckungsrichtung des Kabels 8.

In Erstreckungsrichtung des Biegeabschnitts 130 erstreckt sich die Ausnehmung 161 weiter als die Stegabschnitte (160, 162), insbesondere mehr als doppelt so weit.

In einem nicht dargestellten Ausführungsbeispiel sind die Stegabschnitte (160, 162) konkav ausgeführt und die Ausnehmung 161 ist konvex ausgeführt. Der Biegeabschnitt 130 verläuft dabei durch die schmalste Stelle der Stegabschnitte (160, 162). Vorzugsweise liegen die jeweiligen schmalsten Stellen der Stegabschnitte (160, 162) auf einer Linie, so dass der Biegeabschnitt 130 linienhaft ausgeführt ist.

Gemäß der Erfindung weist das Blechteil (32, 132) im Biegeabschnitt (30, 130) eine geringere Blechstärke auf als in allen anderen Blechteilabschnitten. Vorzugsweise beträgt die Blechstärke im Biegeabschnitt 50 % bis 90 % der maximalen Blechstärke des Blechteils (32, 132), vorzugsweise 60 % bis 80 %, insbesondere 70 % bis 80 %.

### Bezugszeichenliste

- 1: Elektrogerät
- 2: Gehäuseteil
- 3: Haltevorrichtung
- 4: vierter Blechteilabschnitt
- 5: Verbindungsmittel, insbesondere Verbindungskabel
- 6: Ausnehmung
- 7: fünfter Blechteilabschnitt
- 8: Kabel, insbesondere Motoranschlusskabel
- 9: erste Kabelschelle
- 10: zweite Kabelschelle
- 11: sechster Blechteilabschnitt
- 12: Schraubmittel
- 13: Kabel, insbesondere Signalkabel
- 14: siebter Blechteilabschnitt
- 15: erstes Steckverbinderteil
- 16: zweites Steckverbinderteil
- 20: erster Blechteilabschnitt
- 21: Kabelschellenabschnitt
- 22: Schraubmittel
- 23: zweiter Blechteilabschnitt
- 30: Biegeabschnitt
- 31: dritter Blechteilabschnitt
- 32: Blechteil
- 40: Führungsabschnitt
- 41: Verjüngung
- 42: Verjüngung
- 43: Führungsabschnitt
- 44: Ausnehmung
- 45: Bohrung
- 46: Ausnehmung
- 47: Bohrung
- 48: Ausnehmung
- 49: Bohrung
- 50: Ausnehmung
- 51: Bohrung
- 52: Führungsabschnitt
- 53: Stegabschnitt
- 54: Stegabschnitt
- 60: Ausnehmung
- 103: Haltevorrichtung
- 120: Blechteilabschnitt
- 123: Blechteilabschnitt
- 130: Biegeabschnitt
- 131: Blechteilabschnitt
- 132: Blechteil
- 140: Führungsabschnitt
- 143: Führungsabschnitt
- 144: Ausnehmung
- 145: Bohrung
- 146: Ausnehmung
- 147: Bohrung
- 148: Ausnehmung
- 149: Bohrung
- 150: Ausnehmung
- 151: Bohrung
- 152: Führungsabschnitt
- 160: Stegabschnitt
- 161: Ausnehmung
- 162: Stegabschnitt

## Patentansprüche

1. System aufweisend eine Haltevorrichtung, aufweisend ein Blechteil (32, 132), und ein Kabel (8),
wobei die Haltevorrichtung für das Kabel (8) vorgesehen ist,
wobei das Blechteil (32, 132) einen ersten Blechteilabschnitt (20, 120) und einen zweiten Blechteilabschnitt (23, 123) aufweist, die mittels eines Biegeabschnitts (30, 130) verbunden sind,
wobei der erste Blechteilabschnitt (20, 120) im Biegeabschnitt (30,130) relativ zum zweiten Blechteilabschnitt (23, 123) derart verbiegbar ist, dass der erste Blechteilabschnitt (20, 120) und der zweite Blechteilabschnitt (23, 123) in einem nichtverschwindenden Biegewinkel zueinander angeordnet sind,
wobei der erste Blechteilabschnitt (20, 120) elektrisch leitend mit einem Kabelschirm des Kabels (8) verbunden ist,
wobei das Kabel (8) kraftschlüssig mit dem ersten Blechteilabschnitt (20, 120) verbunden ist, insbesondere wobei das Kabel (8) mittels der Haltevorrichtung (3, 103) gehalten und geführt ist, insbesondere lokal geführt ist,
wobei der zweite Blechteilabschnitt (23, 132) eine Schnittstelle zur mechanischen Verbindung aufweist,
wobei das Blechteil (32, 132) einstückig ausgeführt ist, insbesondere als Stanzbiegeteil ausgeführt ist,
wobei das Blechteil (32) eine Ausnehmung (6) aufweist, durch die das Kabel (8) zumindest teilweise hindurchgeführt ist,
wobei das Blechteil (32, 132) einen dritten Blechteilabschnitt (31, 131) aufweist, der sich parallel zu dem ersten Blechteilabschnitt (20, 120) erstreckt, wobei der Biegeabschnitt (30, 130) eine geringere Blechstärke aufweist als alle sonstigen Blechteilabschnitte,
wobei ein weiteres Kabel (13) mittels einer Kabelschelle (10) mit dem dritten Blechteilabschnitt (31, 131) verbunden ist,
wobei ein Leiter des weiteren Kabels (13) elektrisch leitend mit der Kabelschelle (10) und dem dritten Blechteilabschnitt (31, 131) verbunden ist,
wobei das Blechteil (32, 132) einen vierten Blechteilabschnitt (4) und einen fünften Blechteilabschnitt (7) aufweist,
wobei der vierte Blechteilabschnitt (4) in einem nichtverschwindenden Winkel zu dem zweiten Blechteilabschnitt (23, 123) angeordnet ist, insbesondere rechtwinklig angeordnet ist,
wobei der fünfte Blechteilabschnitt (7) in einem nichtverschwindenden Winkel zu dem ersten Blechteilabschnitt (20, 120) angeordnet ist, insbesondere rechtwinklig angeordnet ist,
wobei zwischen dem vierten Blechteilabschnitt (4) und dem fünften Blechteilabschnitt (7) der Biegeabschnitt (30, 130) angeordnet ist,
wobei der Biegewinkel zwischen dem ersten Blechteilabschnitt (20, 120) und dem zweiten Blechteilabschnitt (23, 123) begrenzt ist mittels des vierten Blechteilabschnitts (4) und mittels des fünften Blechteilabschnitts (7), wobei sich der vierte und fünfte Blechteilabschnitt (4, 7) im Wesentlichen parallel von dem ersten beziehungsweise zweiten Blechteilabschnitt (20,23) erstrecken, so dass bei Erreichen eines maximalen Biegewinkels in eine erste Biegerichtung sich der vierte und der fünfte Blechteilabschnitt (4,7) berühren, so dass ein weiteres Verbiegen in die erste Biegerichtung verhindert ist.

2. System nach Anspruch 1,
**dadurch gekennzeichnet, dass**
der Biegeabschnitt (30, 130) linienhaft ausgeführt ist.

3. System nach Anspruch 1 oder 2,
**dadurch gekennzeichnet, dass**
der Biegeabschnitt (30) zwei Stegabschnitte (53, 54) aufweist, wobei die Stegabschnitte (53, 54) voneinander beabstandet sind mittels der Ausnehmung (6),
wobei sich die Ausnehmung (6) in Erstreckungsrichtung des Biegeabschnitts (30) weiter als die Stegabschnitte (53, 54) erstreckt.

4. System nach mindestens einem der vorangegangenen Ansprüche,
**dadurch gekennzeichnet, dass**
das Kabel (8), insbesondere ein weiterer Leiter, insbesondere Innenleiter, des Kabels (8), mit einem Steckverbinderteil (15, 16) verbunden ist,
insbesondere wobei das Steckverbinderteil (15, 16) durch die Ausnehmung (6) hindurchführbar ist,
insbesondere wobei der Kabelschirm an dem ersten Blechteilabschnitt (20, 120) endet.

5. System nach mindestens einem der vorangegangenen Ansprüche,
**dadurch gekennzeichnet, dass**
der Biegeabschnitt (130) durch zumindest zwei Stegabschnitte (160, 162) gebildet ist, die mittels einer zwischen den Stegabschnitten (160, 162) angeordneten Ausnehmung (161) voneinander beabstandet sind.

6. System nach Anspruch 5,
**dadurch gekennzeichnet, dass**
die Stegabschnitte (160, 162) konkav ausgeführt sind und die Ausnehmung (161) konvex ausgeführt ist,
insbesondere wobei die Stegabschnitte (160, 162) linienhaft angeordnet sind.

7. System nach mindestens einem der vorangegangenen Ansprüche,
**dadurch gekennzeichnet, dass**
die Haltevorrichtung (3, 103) eine weitere Kabelschelle (9) aufweist,
wobei das Kabel (8) mittels der weiteren Kabelschelle (9) mit der Haltevorrichtung (3, 103) kraftschlüssig verbunden ist, insbesondere wobei das Kabel (8) zwischen dem Blechteil (32, 132) und der weiteren Kabelschelle (9) angeordnet ist,
wobei das Kabel (8) zugentlastet ist mittels des Blechteils (32, 132) und der weiteren Kabelschelle (9),
insbesondere wobei ein Kabelschirm des Kabels (8) elektrisch leitend mit der weiteren Kabelschelle (9) verbunden ist, insbesondere wobei das Kabel (8) eine Kabelisolierung aufweist, die zwischen der weiteren Kabelschelle (9) und dem Blechteil (32, 132) abisoliert ist.

8. System nach Anspruch 7,
**dadurch gekennzeichnet, dass**
die weitere Kabelschelle (9) einen Kabelschellenabschnitt (21) und eine Ausnehmung für ein Schraubmittel (22) aufweist,
wobei das Blechteil (32, 132) eine Ausnehmung (45, 51, 145, 151) zur Hindurchführung des Kabelschellenabschnitts (21) und eine Bohrung für das Schraubmittel (22) aufweist,
wobei die weitere Kabelschelle (9) mittels des Kabelschellenabschnitts (21) in der Ausnehmung (45, 51, 145, 151) geführt ist,
wobei die weitere Kabelschelle (9) mittels des Schraubmittels (22) lösbar mit dem Blechteil (32, 132) verbunden ist.

9. System nach mindestens einem der vorangegangenen Ansprüche 7 oder 8,
**dadurch gekennzeichnet, dass**
ein zweites Kabel mittels der weiteren Kabelschelle (9) mit der Haltevorrichtung (3, 103) verbunden ist,
insbesondere wobei die Kabel (8) mittels der Haltevorrichtung (3, 103) gebündelt sind, insbesondere wobei das Kabel (8) und das zweite Kabel einen identischen Kabelquerschnitt aufweisen.

10. System nach mindestens einem der vorangegangenen Ansprüche,
**dadurch gekennzeichnet, dass**
das weitere Kabel (13) einen kleineren oder größeren Kabelquerschnitt aufweist als das Kabel (8).

11. System nach mindestens einem der vorangegangenen Ansprüche,
**dadurch gekennzeichnet, dass**
der erste Blechteilabschnitt (20, 120) und der zweite Blechteilabschnitt (23, 123) mittels eines Verbindungskabels elektrisch leitend miteinander verbunden sind.

12. Elektrogerät aufweisend ein System nach mindestens einem der Ansprüche 1 bis 11, **dadurch gekennzeichnet, dass**
das Elektrogerät (1) zumindest ein Gehäuseteil (2) aufweist,
wobei die Haltevorrichtung (3, 103) lösbar verbunden ist mit dem Gehäuseteil (2),
wobei das Gehäuseteil (2) elektrisch leitend verbunden ist mit einem Kabelschirm des Kabels (8) mittels der Haltevorrichtung (3, 103),
insbesondere wobei das Gehäuseteil (2) geerdet ist.

13. Elektrogerät nach Anspruch 12, **dadurch gekennzeichnet, dass**
der zweite Blechteilabschnitt (23, 123) zwei Führungsabschnitte (40, 52) aufweist zur Verbindung der Haltevorrichtung (3, 103) mit dem Gehäuseteil (2), insbesondere als Schnittstelle zur mechanischen Verbindung,
insbesondere wobei die Haltevorrichtung (3, 103) mittels der Führungsabschnitte (40, 52) steckverbunden ist mit dem Gehäuseteil (2),
insbesondere wobei die Haltevorrichtung (3, 103) mittels eines Schraubmittels lösbar mit dem Gehäuseteil (2) verbunden ist.

14. Elektrogerät nach Anspruch 12 oder 13, **dadurch gekennzeichnet, dass**
das Kabel (8) mittels eines Steckverbinderteils (15, 16) mit dem Elektrogerät (1) lösbar verbunden ist,
wobei das Elektrogerät (1) ein Gegensteckverbinderteil aufweist,
insbesondere wobei ein weiterer Leiter, insbesondere Innenleiter, des Kabels (8) elektrisch leitend mit dem Gegensteckverbinderteil verbunden ist mittels des Steckverbinderteils (15, 16).

## Claims

1. A system having a holding device, having a sheet-metal part (32, 132), and a cable (8),
wherein the holding device is provided for the cable (8),
wherein the sheet-metal part (32, 132) has a first portion (20, 120) of the sheet-metal part and a second portion (23, 123) of the sheet-metal part, which are connected by means of a bending portion (30, 130),
wherein the first portion (20, 120) of the sheet-metal part is bendable relative to the second portion (23, 123) of the sheet-metal part in the bending portion (30, 130) in such a manner that the first portion (20, 120) of the sheet-metal part and the second portion (23, 123) of the sheet-metal part are arranged at a non-vanishing bending angle to one another,
wherein the first portion (20, 120) of the sheet-metal part is connected to a cable shield of the cable (8) in an electrically conductive manner,
wherein the cable (8) is connected to the first portion (20, 120) of the sheet-metal part in a force-locked manner, in particular wherein the cable (8) is held and guided by means of the holding device (3, 103), in particular is locally guided,
wherein the second portion (23, 132) of the sheet-metal part has an interface for mechanical connection,
wherein the sheet-metal part (32, 132) is one-piece, in particular is in the form of a stamped and bent part,
wherein the sheet-metal part (32) has an opening (6) through which the cable (8) is passed at least partially,
wherein the sheet-metal part (32, 132) has a third portion (31, 131) of the sheet-metal part, which portion extends parallel to the first portion (20, 120) of the sheet-metal part,
wherein the bending portion (30,130) has a thinner sheet-metal thickness than all other portions of the sheet-metal part,
wherein a further cable (8) is connected to the third portion (31, 131) of the sheet-metal part by means of a cable clamp (10),
wherein a conductor of the further cable (13) is connected to the cable clamp (10) and the third portion (31, 131) of the sheet-metal part in an electrically conductive manner,
wherein the sheet-metal part (32, 132) has a fourth portion (4) of the sheet-metal part and a fifth portion (7) of the sheet-metal part,
wherein the fourth portion (4) of the sheet-metal part is arranged at a non-vanishing angle to the second portion (23, 123) of the sheet-metal part, in particular is arranged at right angles,
wherein the fifth portion (7) of the sheet-metal part is arranged at a non-vanishing angle to the first portion (20, 120) of the sheet-metal part, in particular is arranged at right angles,
wherein the bending portion (30, 130) is arranged between the fourth portion (4) of the sheet-metal part and the fifth portion (7) of the sheet-metal part,
wherein the bending angle between the first portion (20, 120) of the sheet-metal part and the second portion (23, 123) of the sheet-metal part is defined by means of the fourth portion (4) of the sheet-metal part and by means of the fifth portion (7) of the sheet-metal part, wherein the fourth and fifth portions (4, 7) of the sheet-metal part extend in a substantially parallel manner from the first or second portion (20, 23) of the sheet-metal part, so that the fourth and fifth portions (4, 7) of the sheet-metal part contact when a maximum bending angle in a first bending direction is reached, so that further bending in the first bending direction is prevented.

2. A system according to claim 1,
**characterized in that** the bending portion (30, 130) is linear.

3. A system according to claim 1 or 2,
**characterized in that** the bending portion (30) has two crosspiece portions (53, 54), wherein the crosspiece portions (53, 54) are spaced apart from one another by means of the opening (6),
wherein the opening (6) extends further than the crosspiece portions (53, 54) in the extension direction of the bending portion (30).

4. A system according to at least one of the preceding claims,
**characterized in that** the cable (8), in particular a further conductor, in particular inner conductor, of the cable (8) is connected to a plug-and-socket connector part (15, 16), in particular wherein the plug-and-socket connector part (15, 16) can be passed through the opening (6),
in particular wherein the cable shield ends at the first portion (20, 120) of the sheet-metal part.

5. A system according to at least one of the preceding claims,
**characterized in that** the bending portion (130) is formed by at least two crosspiece portions (160, 162) spaced apart from one another by means of an opening (161) arranged between the crosspiece portions (160, 162).

6. A system according to claim 5,
**characterized in that** the crosspiece portions (160, 162) are concave and the opening (161) is convex, in particular wherein the crosspiece portions (160, 162) are arranged in a linear manner.

7. A system according to at least one of the proceeding claims,
**characterized in that** the holding device (3, 103) has a further cable clamp (9), wherein the cable (8) is connected to the holding device (3, 103) in a force-locked manner by means of the further cable clip (9), in particular wherein the cable (8) is arranged between the sheet-metal part (32, 132) and the further cable clamp (9), wherein the cable (8) is relieved of tension by means of the sheet-metal part (32, 132) and the further cable clamp (9), in particular wherein a cable shield of the cable (8) is connected in an electrically conductive manner to the further cable clamp (9), in particular wherein the cable (8) has cable insulation which is stripped between the further cable clamp (9) and the sheet-metal part (32, 132).

8. A system according to claim 7,
**characterized in that** the further cable clamp (9) has a cable clamp portion (21) and an opening for a screw means (22), wherein the sheet-metal part (32, 132) has an opening (45, 51, 145, 151) for through passage of the cable clamp portion (21) and a bore for the screw means (22),
wherein the further cable clamp (9) is guided in the opening (45, 51, 145, 151) by means of the cable clamp portion (21), wherein the further cable clamp (9) is detachably connected to the sheet-metal part (32, 132) by means of the screw means (22).

9. A system according to at least one of the preceding claims 7 and 8,
**characterized in that** a second cable is connected to the holding device (3, 103) by means of the further cable clamp (9), in particular wherein the cables (8) are bundled by means of the holding device (3, 103), in particular wherein the cable (8) and the second cable have an identical cable cross-section.

10. A system according to at least one of the preceding claims,
**characterized in that** the further cable (13) has a smaller or larger cable cross-section than the cable (8).

11. A system according to at least one of the preceding claims,
**characterized in that** the first portion (20, 120) of the sheet-metal part and the second portion (23, 123) of the sheet-metal part are connected to one another in an electrically conductive manner by means of a connecting cable.

12. An electrical apparatus having a system according to at least one of claims 1 to 11,
**characterized in that** the electrical apparatus (1) has at least one housing part (2), wherein the holding device (3, 103) is detachably connected to the housing part (2), wherein the housing part (2) is connected in an electrically conductive manner to a cable shield of the cable (8) by means of the holding device (3, 103), in particular wherein the housing part (2) is earthed.

13. An electrical apparatus according to claim 12,
**characterized in that** the second portion (23, 123) of the sheet-metal part has two guide portions (40, 52) for connection of the holding device (3, 103) to the housing part (2), in particular as an interface for mechanical connection, in particular wherein the holding device (3, 103) is connected to the housing part (2) in a plugged-together manner by means of the guide portions (40, 52), in particular wherein the holding device (3, 103) is detachably connected to the housing part (2) by means of a screw means.

14. An electrical apparatus according to claim 12 or 13
**characterized in that** the cable (8) is detachably connected to the electrical apparatus (1) by means of a plug-and-socket connector part (15, 16), wherein the electrical apparatus (1) has a counter plug-and-socket connector part, in particular wherein a further conductor, in particular inner conductor, of the cable (8) is connected to the counter plug-and-socket connector part in an electrically conductive manner by means of the plug-and-socket connector part (15, 16).

## Revendications

1. Système muni d'un dispositif de retenue, comportant une pièce en tôle (32, 132) et un câble (8),
ledit dispositif de retenue étant prévu pour ledit câble (8),
ladite pièce en tôle (32, 132) comprenant une première région (20, 120) et une deuxième région (23, 123) reliées au moyen d'une région flexible (30, 130),
la première région (20, 120) de la pièce en tôle pouvant être fléchie par rapport à la deuxième région (23, 123) de ladite pièce en tôle, dans ladite région flexible (30, 130), de façon telle que ladite première région (20, 120) de la pièce en tôle et ladite deuxième région (23, 123) de ladite pièce en tôle soient mutuellement disposées selon un angle de flexion constant,
ladite première région (20, 120) de la pièce en tôle étant en liaison électriquement conductrice avec un blindage du câble (8),
lequel câble (8) est relié par engagement positif à ladite première région (20, 120) de la pièce en tôle, sachant notamment que ledit câble (8) est maintenu et guidé, en particulier guidé localement au moyen du dispositif de retenue,
ladite deuxième région (23, 123) de la pièce en tôle étant dotée d'un interface dédié à la liaison mécanique,
ladite pièce en tôle (32, 132) étant de réalisation monobloc, en particulier sous la forme d'une pièce venue d'estampage-pliage,
laquelle pièce en tôle (32) est munie d'un évidement (6) à travers lequel le câble (8) est au moins partiellement guidé d'un trait,
sachant que la pièce en tôle (32, 132) comprend une troisième région (31, 131) s'étendant parallèlement à la première région (20, 120) de ladite pièce en tôle,
la région flexible (30, 130) présentant une moindre épaisseur de tôle que toutes les autres régions de ladite pièce en tôle,
un câble supplémentaire (13) étant relié à ladite troisième région (31, 131) de la pièce en tôle, au moyen d'un serre-câble (10),
sachant qu'un conducteur dudit câble supplémentaire (13) est en liaison électriquement conductrice avec ledit serre-câble (10) et avec ladite troisième région (31, 131) de ladite pièce en tôle,
laquelle pièce en tôle (32, 132) comprend une quatrième région (4) et une cinquième région (7),
ladite quatrième région (4) de la pièce en tôle étant disposée selon un angle constant par rapport à la deuxième région (23, 123) de ladite pièce en tôle, en particulier selon un angle droit,
ladite cinquième région (7) de la pièce en tôle étant disposée selon un angle constant par rapport à la première région (20, 120) de ladite pièce en tôle, en particulier selon un angle droit,
la région flexible (30, 130) étant interposée entre ladite quatrième région (4) de la pièce en tôle et ladite cinquième région (7) de ladite pièce en tôle,
sachant que l'angle de flexion, entre la première région (20, 120) de la pièce en tôle et la deuxième région (23, 123) de ladite pièce en tôle, est limité au moyen de ladite quatrième région (4) de la pièce en tôle et au moyen de ladite cinquième région (7) de ladite pièce en tôle, lesquelles quatrième et cinquième régions (4, 7) de la pièce en tôle s'étendent pour l'essentiel parallèlement, à partir des première et deuxième régions respectives (20, 23) de ladite pièce en tôle, de telle sorte que lesdites quatrième et cinquième régions (4, 7) de la pièce en tôle entrent réciproquement en contact lorsqu'un angle maximal de flexion est atteint dans une première direction de flexion, empêchant ainsi une flexion plus accentuée dans ladite première direction de flexion.

2. Système selon la revendication 1,
**caractérisé par le fait que**
la région flexible (30, 130) est réalisée avec tracé linéaire.

3. Système selon la revendication 1 ou 2,
**caractérisé par le fait que**
la région flexible (30) comporte deux zones (53, 54) formant membrures, lesquelles zones (53, 54) formant membrures sont espacées l'une de l'autre au moyen de l'évidement (6), l'étendue dudit évidement (6) étant supérieure à celle desdites zones (53, 54) formant membrures, dans la direction de l'étendue de ladite région flexible (30).

4. Système selon au moins l'une des revendications précédentes,
**caractérisé par le fait que**
le câble (8), notamment un conducteur supplémentaire, en particulier un conducteur intérieur dudit câble (8), est relié à une partie (15, 16) de connexion enfichable,
sachant notamment que ladite partie (15, 16) de connexion enfichable peut être guidée d'un trait à travers l'évidement (6),
le blindage dudit câble s'achevant, en particulier, au niveau de la première région (20, 120) de la pièce en tôle.

5. Système selon au moins l'une des revendications précédentes,
**caractérisé par le fait que**
la région flexible (130) est constituée d'au moins deux zones (160, 162) formant membrures, espacées l'une de l'autre au moyen d'un évidement (161) interposé entre lesdites zones (160, 162) formant membrures.

6. Système selon la revendication 5,
**caractérisé par le fait que**
les zones (160, 162) formant membrures sont de réalisation concave, et l'évidement (161) est de réalisation convexe,
sachant notamment que la disposition desdites zones (160, 162) formant membrures est linéaire.

7. Système selon au moins l'une des revendications précédentes,
**caractérisé par le fait que**
le dispositif de retenue (3, 103) est muni d'un serre-câble (9) supplémentaire,
le câble (8) étant relié audit dispositif de retenue (3, 103) par engagement positif, au moyen dudit serre-câble (9) supplémentaire, sachant notamment que ledit câble (8) est interposé entre la pièce en tôle (32, 132) et ledit serre-câble (9) supplémentaire,
ledit câble (8) étant soulagé en traction au moyen de ladite pièce en tôle (32, 132) et dudit serre-câble (9) supplémentaire,
sachant notamment qu'un blindage dudit câble (8) est en liaison électriquement conductrice avec ledit serre-câble (9) supplémentaire, ledit câble (8) étant pourvu, en particulier, d'une isolation dénudée entre ledit serre-câble (9) supplémentaire et ladite pièce en tôle (32, 132).

8. Système selon la revendication 7,
**caractérisé par le fait que**
le serre-câble (9) supplémentaire comprend une région (21) et un évidement destiné à un moyen vissable (22),
la pièce en tôle (32, 132) comprenant un évidement (45, 51, 145, 151), dédié au passage traversant de ladite région (21) du serre-câble, et un perçage dévolu audit moyen vissable (22),
sachant que ledit serre-câble (9) supplémentaire est guidé dans ledit évidement (45, 51, 145, 151) au moyen de ladite région (21) dudit serre-câble,
lequel serre-câble (9) supplémentaire est relié à ladite pièce en tôle (32, 132) de manière libérable, à l'aide dudit moyen vissable (22).

9. Système selon au moins l'une des revendications 7 ou 8 précédentes, **caractérisé par le fait**
**qu'**un second câble est relié au dispositif de retenue (3, 103) au moyen du serre-câble (9) supplémentaire,
les câbles (8) étant notamment groupés en faisceaux, au moyen dudit dispositif de retenue (3, 103),
sachant, en particulier, que le câble (8) et ledit second câble présentent une section transversale identique.

10. Système selon au moins l'une des revendications précédentes,
**caractérisé par le fait que**
le câble (13) additionnel présente une section transversale inférieure ou supérieure à celle du câble (8).

11. Système selon au moins l'une des revendications précédentes,
**caractérisé par le fait que**
la première région (20, 120) de la pièce en tôle et la deuxième région (23, 123) de ladite pièce en tôle sont en liaison mutuelle électriquement conductrice, au moyen d'un câble de jonction.

12. Appareil électrique équipé d'un système conforme à au moins l'une des revendications 1 à 11,
**caractérisé par le fait que**
ledit appareil électrique (1) comporte au moins une partie (2) formant boîtier,
le dispositif de retenue (3, 103) étant relié de manière libérable à ladite partie (2) formant boîtier,
laquelle partie (2), formant boîtier, est en liaison électriquement conductrice avec un blindage du câble (8), au moyen dudit dispositif de retenue (3, 103),
sachant notamment que ladite partie (2), formant boîtier, est raccordée à la terre.

13. Appareil électrique selon la revendication 12,
**caractérisé par le fait que**
la deuxième région (23, 123) de la pièce en tôle est dotée de deux zones de guidage (40, 52) en vue de la liaison du dispositif de retenue (3, 103) avec la partie (2) formant boîtier, notamment en tant qu'interface dédié à la liaison mécanique,
sachant notamment que ledit dispositif de retenue (3, 103) est relié par emboîtement à ladite partie (2) formant boîtier, au moyen desdites zones de guidage (40, 52),
lequel dispositif de retenue (3, 103) est, en particulier, relié de manière libérable à ladite partie (2) formant boîtier, à l'aide d'un moyen vissable.

14. Appareil électrique selon la revendication 12 ou 13,
**caractérisé par le fait que**
le câble (8) est relié audit appareil électrique (1) de manière libérable, au moyen d'une partie (15, 16) de connexion enfichable,
ledit appareil électrique (1) étant pourvu d'une partie complémentaire de connexion enfichable,
sachant notamment qu'un conducteur supplémentaire, en particulier un conducteur intérieur du câble (8) est en liaison électriquement conductrice avec ladite partie complémentaire de connexion enfichable, au moyen de ladite partie (15, 16) de connexion enfichable.
